# EUROPEAN PATENT APPLICATION

(11) **EP 4 692 876 A1**
(43) Date of publication of application: **11.02.2026**
(21) Application number: 24217574.3
(22) Date of filing: 04.12.2024
(51) Int. Cl.: G02B 6/38

(54) **MODULAR CONNECTOR HOUSING**

(30) Priority: 09.08.2024 US 202418799654
(71) Applicant: ODU GmbH & Co KG., 84453 Mühldorf a. Inn (DE)
(72) Inventor: HOBMAIER, Christian, 84453 Muehldorf a. Inn (DE); SCHABERL, Josef, 84453 Muehldorf a. Inn (DE)
(74) Representative: Huebner, Stefan Rolf

(57) **Abstract**

A stacking module (2) for a connector housing (1) which can be assembled with another, identical stacking module (2) in a stack to form the connector housing (1). The stacking module (2) comprises a base plate (5) with an upper face and a lower face, wherein at a first edge of the base plate (5) an upper side wall (6) extends away from the base plate's (5) upper face. A first fastener and a first counter fastener are provided at one of the first and the second edges of the base plate (5). A lower side wall (7) extends at a second edge of the base plate (5) away from the lower face of the base plate (5), the second edge being opposite the first edge. A lower end module (3) and an upper end module (4) which can be assembled with the stacking module (2).

## Description

### Field of the invention

The invention relates to a stacking module for a connector housing which can be assembled with an identical second stacking module in a stack to form the connector housing. The invention moreover relates to a lower end module for a connector housing which can be assembled with the stacking module or with an upper end module to form the connector housing, and to an upper end module for a connector housing which can be assembled with the stacking module or with the lower end module to form the connector housing. The invention further related to a set of modules for a connector housing, and to a connector housing assembled from the set.

### Background of the invention

DE 102021116837 A1 and DE 10 2020 123 187 A1 disclose printed circuit board connectors composed of several single-pole segments that can be fastened together by attaching the housings of adjacent segments to each other. The housings are attached to their neighbours by means of snap-fitting, screwing, or other types of fastening. A left and a right end segment is combined with any number of middle segments.

Another modular printed circuit board connector is known from DE 102017119287 B4. The connector is assembled by inserting a connecting bar into the dovetail grooves on individual connector modules.

DE 102014105386 A1 describes a stackable insulating housing which has latching hooks on one side, and corresponding latching holes on the other side to attach adjacent housings to each other. A similar stackable housing is disclosed in DE 10100081 B1.

In a similar fashion, a plurality of stacked housings of connector members forms the connector disclosed in US 20220376428 A1. The housings are held together by lock portions of one housing engaging with recesses on an adjacent housing. A connector of this type is also disclosed in EP 1 710 864 A2. The connector housing of EP 1033786 B1 comprises of a plurality of sub-housings that are stacked together by loop portions and matching retaining claws.

From EP 1305850 B1, an electrical connector is known the housing of which has on each of its two narrow longitudinal sides a recess with a projecting rib. Several of these connectors can be combined into a multi-connector by pressing a retention rod into the lateral engagement openings, where the ribs engage into mating grooves of the locking element.

US 10459173 B2, US 10989881 B2, US 11131813 B2, WO 2020003137 A1, WO 2017066139 A1 and WO 2018116135 A1 disclose optical connectors that comprises multiple optical ferrules in a shared housing. From US 11067756 B2 a stackable adapter is known that has opposing ports configured to accept fibre optic connectors. Individual stackable adapters can be combined to form a stackable adapter assembly by means of protrusions and recesses on their outside.

### Object of the invention

It is an object of the present invention to provide an improved stacking module for a connector housing which can be assembled with an identical second stacking module in a stack to form the connector housing. It is a further object of the present invention to provide an improved lower end module for a connector housing which can be assembled with the stacking module or with an upper end module to form the connector housing, and to an improved upper end module for a connector housing which can be assembled with the stacking module or with the lower end module to form the connector housing. The invention further aims at providing an improved set of modules for a connector housing, and at providing an improved connector housing assembled from the set.

### Solution according to the invention

In the following, any reference to one (including the articles "a" and "the"), two or another number of objects is, provided nothing else is expressly mentioned, meant to be understood as not excluding the presence of further such objects in the invention. The reference numerals in the patent claims are not meant to be limiting but merely serve to improve readability of the claims.

According to a first aspect of the invention, the problem is solved by a stacking module for a connector housing with the features of claim 1. The stacking module can be assembled with another, identical stacking module in a stack to form the connector housing. It comprises a base plate with an upper face and a lower face. At a first edge of the base plate, an upper side wall extends away from the base plate's upper face. A first fastener and a first counter fastener are provided at one of the first edge and the second edge of the base plate. A lower side wall extends at a second edge of the base plate away from the lower face of the base plate, the second edge being opposite the first edge.

The term "housing" as used herein refers to an assembly of the stacking modules, which assembly provides one or more cavities into each of which a part of the connector, for example a cable end section as discussed further below, can be placed. In the context of the present invention, the expression "one of" with regard to the first edge and the second edge being provided with a (counter) fastener is meant to indicate that either the first edge or the second edge can be provided with such (counter) fastener.

As used herein, the term "fastener" and "counter fastener" refer to a pair of fastening elements that are complementary in the sense the fastener of the module can cooperate with the counter fastener of the other module to fasten the two modules together in the assembling of the two modules in a stack.

It is an achievable advantage of the stacking module that an arbitrary number of stacking modules can be assembled in a stack to form the housing. It is another achievable advantage of the present invention that each stacking module provides two half-cavities, an upper half-cavity (including the upper face of the base plate and the upper side wall) and a lower half-cavity (including the lower face of the base plate and the lower side wall). Where adjacent modules meet, a complete cavity can be formed, to which each module contributes one half cavity. As a result, the housing can comprise multiple separate cavities, which, preferably, each can house a part of a connector to be housed in the housing.

Advantageously, the stacking module allows for a mode of assembly, in which a part of the connector is placed into one half cavity (for example the upper half cavity) of a stacking module, the cavity is then closed by a complementary half-cavity (in the example the lower half-cavity) of another stacking module, and another part of the connector is placed into the other half cavity (in the example the upper half-cavity) of this other stacking module. This other half-cavity can then be closed with a complementary half-cavity (in the example the lower half-cavity) of yet another stacking module and so on for an arbitrary number of stacking modules.

According to a second aspect of the invention, the problem is solved by a lower end module for a connector housing with the features of claim 12. The lower end module can be assembled with a stacking module to form the connector housing. The lower end module comprising a base plate with a upper face and a lower face. At a first edge of the base plate an upper side wall extends away from the base plate's upper face. A first fastener is provided at one of the first edge or a second edge of the base plate so that the first fastener of the lower end module can cooperate with the first counter fastener of the stacking module to assemble the lower end module with the stacking module.

Advantageously, the lower end module can be used to provide a complementary half-cavity to a lower half-cavity of a stacking module, in order to form a complete cavity in which a component of the connector can be housed.

According to a third aspect of the invention, the problem is solved by an upper end module for a connector housing with the features of claim 13. The upper end module can be assembled with the stacking module to form the connector housing. The upper end module comprises a base plate with an upper face and a lower face. At a second edge of the base plate a lower side wall extends away from the base plate's lower face. A second fastener is provided at one of the second edge or a first edge of the base plate so that the second fastener of the upper end module can cooperate with the second counter fastener of the stacking module to assemble the upper end module with the stacking module.

Advantageously, the upper end module can be used to provide a complementary half-cavity to an upper half-cavity of a stacking module, in order to form a complete cavity in which a component of the connector can be housed.

According to a fourth aspect of the invention, the problem is solved by a set for assembling a connector housing with the features of claim 14. The set comprises at least two stacking modules, or at least two modules of the group of modules comprising a stacking module, a lower end module and an upper end module.

It is an achievable advantage of this aspect of the invention that complementary half-cavities of the components of the set can form a complete cavity in which a component of the connector can be housed.

According to a fifth aspect of the invention, the problem is solved by a housing with the features of claim 15. The housing is assembled from the set.

### Preferred embodiments of the invention

Preferred features of the invention which may be applied alone or in combination are discussed in the following and in the dependent claims.

Whenever in the following reference is made to a "module" without specifically referring to a stacking module, a lower end module or an upper end module, this shall be considered to refer to any one of a stacking module, a lower end module or an upper end module.

At least two, preferably more than two, more preferably more than 5, even more preferably more than 11 stacking modules can be assembled in a stack to form the connector housing. Also preferably, each of the lower end module and the upper end module can, instead of being assembled with an adjacent stacking module, be assembled with each other.

In the stacking module, at one of the first edge and the second edge of the base plate a first fastener and a first counter fastener are provided. This has the advantageous effect that the first fastener of the module can cooperate with a first counter fastener of an adjacent, identical stacking module to fasten the two modules together in the assembling of the two modules in a stack. Similarly, the first counter fastener of the module can cooperate with a first fastener of an adjacent, identical stacking module to fasten the two modules together in the assembling of the two modules in a stack. The adjacent stacking module may be stacked on top of the stacking module, or the stacking module may be stacked on top of the adjacent stacking module.

Preferably, at the other of the first and the second edge of the base plate of the stacking module, a second fastener and a second counter fastener are provided. As in the case of the first fastener and counter fastener, this has the advantageous effect that the second fastener of the module can cooperate with a second counter fastener of an adjacent, identical stacking module to fasten the two modules together in the assembling of the two modules in a stack. Similarly, the second counter fastener of the module can cooperate with a second fastener of an adjacent, identical stacking module to fasten the two modules together in the assembling of the two modules in a stack. Again, the adjacent stacking module may be stacked on top of the stacking module, or the stacking module may be stacked on top of the adjacent stacking module. Fastening adjacent modules together not only at one edge of the base plate but at the two opposite edges can render the fastening of the two modules more secure and reliable.

In a preferred stacking module, the fastener is for fastening the module to an adjacent module on one side (for example the upper side) of the module, while the corresponding counter fastener is for fastening the module to an adjacent module on the other side of the stacking module. In contrast, the lower end module and the upper end module have an adjacent module only on one side, namely above or below itself, respectively.

Accordingly, while the lower end module has a first fastener at one of the first edge and the second edge of the base plate, the lower end module preferably lacks a counter fastener at this one edge. At the other edge of the first edge and the second edge of the base plate of the lower end module, a second counter fastener is provided to cooperate with a second fastener of the adjacent module. Yet, preferably, the lower end module lacks a fastener at this other edge.

Similarly, while the upper end module has a second fastener at one of the second edge and the first edge of the base plate, the upper end module preferably lacks a counter fastener at this one edge. At the other edge of the second edge and the first edge of the base plate of the upper end module, a first counter fastener is provided to cooperate with a first fastener of the adjacent module. Yet, preferably, the lower end module lacks a fastener at this other edge.

The preferred fastener is one element of the group consisting of a latching hook and a latching edge which can cooperate with the latching hook to form a latching connection, and the preferred counter fastener is the other element of the group. The preferred latching hook can snap onto the latching edge to establish the latching connection. Preferably, the fastener is the latching hook, and the counter fastener is the latching edge. The preferred latching hook comprise of an elastically resilient tongue portion, and a hook portion that extends at an approximate right angle towards the inside of the stacking module.

Yet, the invention also encompasses pairs of a fastener and matching counter fastener that operate by other principles of connection. For example: The fastener and the counter fastener may rely on a clamping connection as is, ia, known from the famous LEGO bricks; the fastener may be one element of the group consisting of a groove (for example a dove tail groove) and a matching projection which can held in the groove by a force fit or a form fit, as is, ia, known from the famous Fischertechnik components, and the preferred counter fastener is the other element of the group; the fastener may be one element of the group consisting of the two components of a bayonet lock, and the preferred counter fastener is the other element of the group;; or the fastener may be one element of the group consisting of a screw and a nut, and the preferred counter fastener is the other element of the group.

The fastener and the counter fastener preferably can connect reversibly, ie, unfastenably. It is an achievable advantage of a pair of fastener and counter fastener that can be unfastened, that respective modules after assembly can be detached again to be disassembled. Thus, if, for example, a connector part housed in a cavity formed by two adjacent modules needs to be replaced, the connection of the fasteners can be reversed to detach the two modules from each other, thereby obtaining access to the connector part. After replacing the connector part, the two modules can be re-assembled. For the purpose of unfastening, the preferred latching hook is provided with a handle edge that is accessible from the outside of the module even after the modules has been assembled with another module.

Preferably, the side wall along its associated edge of the base plate is interrupted to give way for the fastener and/or the counter fastener. Moreover, one of the fastener and the counter fastener preferably extends beyond the distal edge of the side wall in order to be able to connect with the other of the fastener and the counter faster of the adjacent module. As used herein, the term "distal edge of the side wall" refers the edge of the side wall that is opposite the edge which the side wall shares with the base plate. For example, the preferred latching hook extends away from the edge of the base plate essentially in parallel to the adjacent parts of the side wall. More preferably, at least with its hook portion the latching hook extends beyond the distal edge of the side wall so that it can snap onto the latching edge of the adjacent module.

It is preferred, though not necessary, that if the first fastener is one element of a group of elements (such as one of the groups listed above, for example latching hook and latching edge) and the first counter fastener is the other element of this group, then the second fastener likewise is the one element, and the second counter fastener is the other element of the group. Yet, the invention also encompasses embodiments in which the elements are reversed, for example the first fastener being a latching hook and the second fastener being a latching edge, or where the first fastener and counter fastener are entirely different types of fasteners (for example a latching connection) than the second fastener and counter fastener (for example a clamping connection).

The preferred pairs of fastener and counter fastener can connect the modules rigidly. In a preferred stacking module, one of the first edge of the base plate and the distal edge of the upper side wall is provided with at least one protrusion and the other of the first edge of the base plate and the distal edge of the upper side wall is provided with a recess so that the protrusion or recess can cooperate with the recess or protrusion of an adjacent module when the two modules are assembled. Advantageously, the protrusion(s) and recess(es) can contribute to fixedly aligning the stacking module with an adjacent stacking module. In the preferred lower end module, the distal edge of the upper side wall is likewise provided with at least one protrusion or recess, preferably in a manner identical to the upper side wall of the stacking module so that the protrusion or recess can cooperate with the recess or protrusion of an adjacent module when the two modules are assembled. Yet, the lower end module typically does not require recess(es) or protrusions at the first edge of the base plate. Conversely, the preferred upper end module has at least one recess or protrusion at the first edge of the base plate, preferably matching the protrusion(s) or recess(es) of the upper side wall of the stacking module so that the recess or protrusion can cooperate with the protrusion or recess of an adjacent module when the two modules are assembled.

Likewise, in a preferred stacking module, one of the second edge of the base plate and the distal edge of the lower side wall is provided with at least one protrusion and the other of the second edge of the base plate and the distal edge of the lower side wall is provided with a recess so that the protrusion or recess can cooperate with the recess or protrusion of an adjacent module when the two modules are assembled. In a preferred lower end module, at least one recess or protrusion is provided at the second edge of the base plate, preferably in a manner matching the protrusion(s) or recess(es) of the lower side wall of the stacking module so that the recess or protrusion can cooperate with the protrusion or recess of an adjacent module when the two modules are assembled. Conversely, the distal edge of the lower side wall of the preferred upper end module has at least one protrusion or recess, preferably matching the recess(es) or protrusion(s) at the second edge of the base plate of the stacking module so that the protrusion or recess can cooperate with the recess or protrusion of an adjacent module when the two modules are assembled. Yet, the upper end module typically does not require recess(es) or protrusion(s) at the second edge of the base plate.

The preferred protrusion is tapered and/or comprises a lead-in edge at its open end, ie, the end that extends towards the recess of the adjacent stacking module. Similarly, a preferred recess is tapered and/or comprises a lead-in edge at its opening.

The preferred connector part held in the cavity is an end section of a cable. In a preferred stacking module and/or a preferred lower end module, the upper face of the base plate can support a lower face of an end section of a cable. In a preferred stacking module and in a preferred upper end module, the lower face of the base plate can support an upper face of an end section of a cable.

The cable preferably is a flat ribbon cable. The preferred flat ribbon cable comprises multiple, preferably more than two, for example 3, 4, 8, 12 or 16 parallel strands. The preferred cable comprises a coupling unit (sometimes also referred to as a ferrule) at its end, which coupling unit can connect to a mating coupling unit of another cable. Preferably, at a distance from the coupling unit a collet (sometimes also referred to as a retainer) is fixedly attached to the cable's end section. Particularly preferably the cable is an optical cable, each strand being an optical wave guide. As used herein, the term "optical wave guide" refers to an optical element that propagates signal light. An optical waveguide comprises at least one core with a cladding, wherein the core and cladding are configured propagate light within the core, eg, by total internal reflection. An optical waveguide may, for example, be a single or multi-mode waveguide, a single core fibre, a multi-core optical fibre, or a polymeric waveguide.

A preferred side wall extends beyond the length of the first and second edges of the base plate. Thereby, it is achievable that the sidewall essentially closes off its side of the module.

The lower side wall of the preferred stacking module comprises a lower coupling unit support member for supporting a lower face of a coupling unit of a connector that can be held in the module. The preferred lower coupling unit support member is a projection that extends from the lower side wall towards the inside of the stacking module. Similarly, the upper side wall of the preferred stacking module and a preferred lower end module comprises an upper coupling unit support member for supporting an upper face of a coupling unit of a connector that can be held in the module. The preferred upper coupling unit support member is a projection that extends from the upper side wall towards the inside of the stacking module.

The lower and the upper coupling unit support members can hold the coupling unit, preferably the coupling unit of a cable end section the lower face of which is supported by the upper face of the module's base plate, in a fix vertical position. If two adjacent modules are stacked together, the lower coupling unit support member preferably doubles as an upper coupling unit support member of an adjacent connector part, and vice versa. Thereby it is achievable that the coupling unit is supported on both sides, the sider of the upper side wall and the side of the lower side wall. Preferably, the lower coupling unit support member of the stacking module and the upper coupling unit support member of an adjacent coupling module are arranged such that if the two modules are assembled into a stack, the coupling unit is movable in the longitudinal direction of the end section of the cable.

The lower side wall of the preferred module comprises a lower collet support member for supporting a lower face of a collet of a connector that can be held in the module. The preferred lower collet support member is a projection that extends from the lower side wall towards the inside of the stacking module. Similarly, the upper side wall of the preferred stacking module and a preferred lower end module comprises an upper collet support member for supporting an upper face of a collet of a connector that can be held in the module. The preferred upper collet support member is a projection that extends from the upper side wall towards the inside of the stacking module.

The lower and the upper collet support members can hold the collet, preferably the collet of a cable end section the lower face of which is supported by the upper face of the module's base plate, in a fix vertical position. If two adjacent modules are stacked together, the lower collet support member preferably doubles as an upper collet support member of an adjacent connector part, and vice versa. Thereby it is achievable that the collet is supported on both sides, the sider of the upper side wall and the side of the lower side wall.

Preferably, the module moreover comprises one or more backward stop(s) for the collet to prevent the collet from moving, in a longitudinal direction of the cavity, as pressure is applied onto the coupling unit, as is typically the case of the coupling unit is coupled with another coupling unit. Moreover, the module preferably comprises a forward stop for the collet. Preferably, the module's upper side wall comprises a forward stop and/or a backward stop for the collet that can be held in the module. The preferred forward stop and/or backwards stop is integrated with the upper and lower collet support members.

Preferably, at least two elements of the group of elements comprising (1) the coupling unit support members (2) the collet support members, and (3) the base plate in cooperation urge the end section of the cable between the coupling unit and the collet in a curved shape. The radius of curvature preferably extends in a plane that is spanned by the stacking direction of the stack and the longitudinal direction of the cable. Thereby it can be achieved that in cooperation with the backward stop the cable can exert a spring force on the coupling unit. The spring force can elastically bias the coupling unit against a matching counter coupling unit to ensure a reliable connection between the coupling unit and the counter coupling unit.

In some embodiments of the invention, the connector housing according to the invention forms part of a connector part, preferably a male or a female connector part. Preferably the connector housing is placed inside an outer housing of the connector part. Preferably, the connector housing is biased against the outer connector housing towards the connector face of the connector part, where the connector part can be attached to a mating connector part. For this, the preferred connector housing is arranged slidingly in the outer connector housing. A biasing force preferably is provided by an elastic element, for example a spring such as a coil spring.

### Brief description of the drawings

In the following, further preferred embodiments of invention are illustrated by means of examples. The invention is not limited to these examples, however.

The drawings schematically show:
- Figure 1A: A perspective view of the uppers side of a stacking module;
- Figure 1B: A perspective view of the lower side of the stacking module of Figure 1A;
- Figure 2A: A cross-sectional view of a connector housing formed by assembling a lower end module, seven stacking modules, and an upper end module in a stack, the cavities formed by the modules holding the ends of 8 optical flat ribbon cables, which cross-section is in a plane that is spanned by the stacking direction of the connector housing and the longitudinal axis of the ends of 8 optical flat ribbon cables;
- Figure 2B: A cross section of the connector housing of Figure 2A in a plane that extends perpendicularly to the longitudinal axis of the ends of 8 optical flat ribbon cables;
- Figure 2C: A perspective view of the connector housing of Figures 2A and 2B;
- Figure 3: A perspective view of the two lowest modules of the connector housing of Figures 2A to 2C with their respective cable ends.
- Figure 4A: A perspective view of the uppers side of the lower end module of Figures 2A to 2C and 3;
- Figure 4B: A perspective view of the lower side of the lower end module of Figures 2A to 2C, 3 and 4A;
- Figure 4C: A side view of the lower end module of Figures 2A to 2C, 3, 4A and 4B;
- Figure 5A: A perspective view of the uppers side of the upper end module of Figures 2A to 2C;
- Figure 5B: A perspective view of the lower side of the upper end module of Figures 2A to 2C 5A;
- Figure 6A: A cross-sectional view of a female connector part coupled to a male connector part;
- Figure 6B: A perspective view onto the side of the coupling units of the female connector part of Figure 6A;
- Figure 6C: A perspective view onto the side of the coupling units of the male connector part of Figures 6A; and
- Figure 6D: A perspective view onto the side of the collets of the female connector part of Figure 6A.

### Detailed description of an embodiment of the invention

In the following description of preferred embodiments of the invention, identical reference numerals refer to identical or similar modules.

A connector housing 1 can be assembled of up to three kind of modules, a stacking module 2, a lower end module 3 and an upper end module 4.

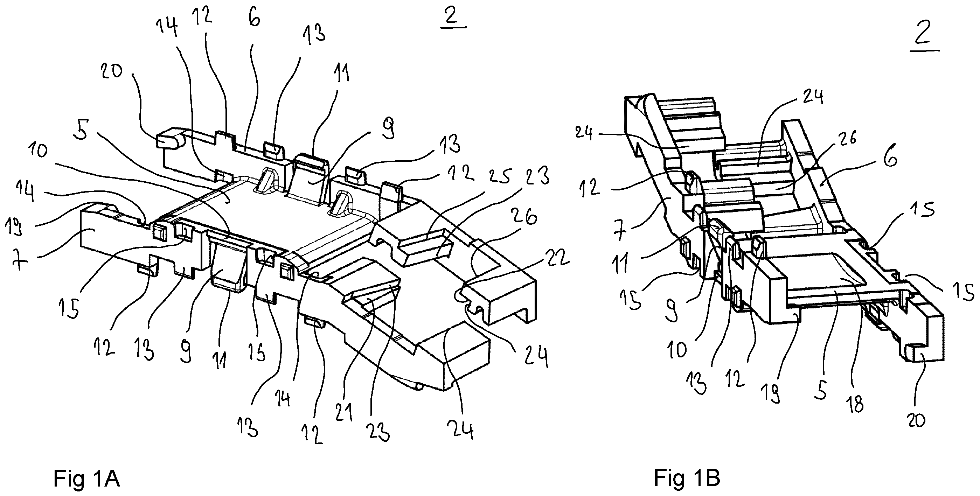

An exemplary stacking module 2 for a connector housing 1 is shown in Figures 1A and 1B. Any number of these stacking modules 2 can be stacked upon each other to form the connector housing 1. The stacking module 2 comprises a base plate 5, the upper face of which can be seen in **Figure 1A****,** and the lower face of which is shown in **Figure 1B****.** The base plate has two opposite edges, each of which is provided with a side wall 6, 7. At a first edge (facing away from the viewer in **Figure 1A** and on the right in **Figure 1B****)** of the base plate 5, an upper side wall 6 extends away from the base plate's upper face, and at a second edge (facing towards the viewer in **Figure 1A** and on the left in **Figure 1B****)** of the base plate 5, a lower side wall 7 extends away from the lower face of the base plate 5. As can be seen best in **Figure 1B****,** the combination of the base plate 5 and the side walls 6, 7 has a cross section that is similar to the letter "Z" but with right angles between the three sections.

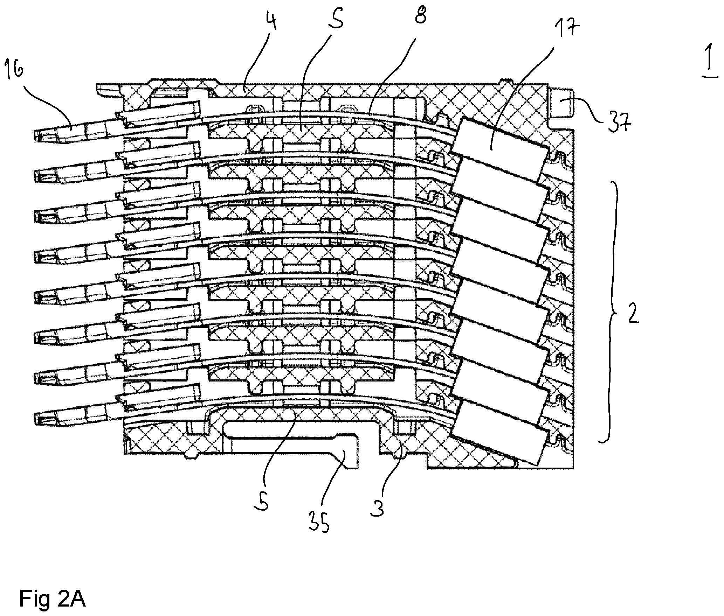

The stacking module 2 provides two halves of a cavity for receiving an end section 8 of a cable: If onto the stacking module 2 an identical second stacking module 2 is stacked, the stacking module 2 forms one half and the second stacking module 2 forms another half of a cavity for housing the end section 8 of the cable. Similarly, if the stacking module 2 is stacked onto an identical third stacking module 2, the stacking module 2 and the third stacking module 2 form complementary halves of a cavity for housing an end section 8 of a cable. Thus, each pair of adjacent modules 2 forms a separate cavity. This can be seen in **Figures 2A to 2C****,** where seven stacking modules 2 are assembled in a stack.

The stacking module's side walls 6, 7 extend beyond both ends of the first and second edges of the base plate 5. Moreover, along each of the first and second edges of the base plate 5, the corresponding side wall 6, 7 is interrupted to give way for a latching hook 9. The latching hook 9 comprise of an elastically resilient tongue portion that extends away from the edge of the base plate essentially in parallel to the adjacent parts of the side wall 6, 7, and a hook portion that extends at an approximate right angle towards the inside of the stacking module 2.

At the base of each latching hook 9, a latching edge 10 is provided so that each latching hook 9 can snap onto a corresponding latching edge 10 of an adjacent stacking module 2 to rigidly assemble the stacking modules 2. Moreover, each latching hooks 9 is provided with a handle edge 11 that is accessible from the outside even after the modules 2 have been assembled. By operating the handle edge 11, a user can release the snap connection between the latching hook 9 and its corresponding latching edge 10.

Each side wall 6, 7 is provided at its distal edge with four protrusions 12, 13, two 12 on the inside and two 13 on the outside of the side wall 6, 7, that project away from the sidewall's 6, 7 distal edge as an extension of it. On the proximal edge of each side wall 6, 7, below each protrusion 12, 13 and on the same side, inside or outside, of the side wall 6, 7 as the protrusion, there is a recess 14, 15. Each protrusion can slide into a corresponding recess of an adjacent module when the stacking modules are assembled, thereby adding to the rigidity of the assembly.

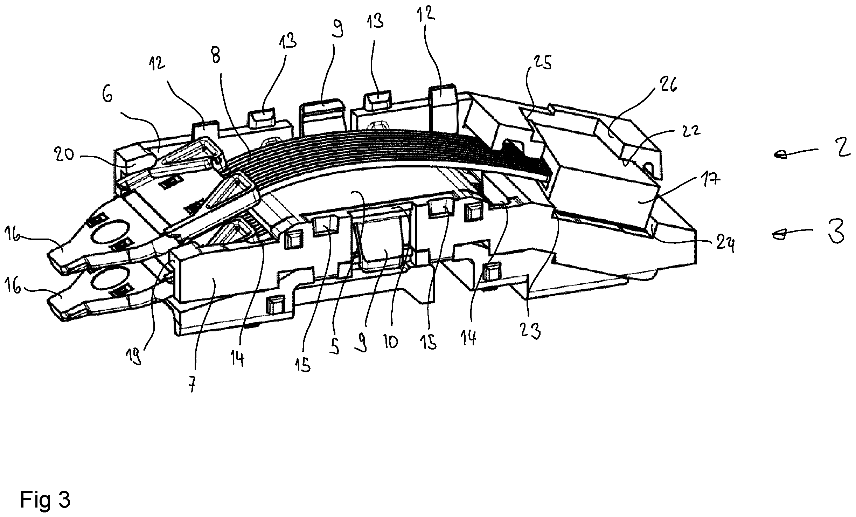

Viewed together, **Figures 2A** **and** **3** provide the best impression of how the end section 8 of an optical flat ribbon cable extends in the cavity formed by two adjacent modules 2, 3, 4. At its end, the cable end section 8 comprises a coupling unit 16 which can connect to a complementary coupling unit 16 of another cable end section 8. Moreover, at a distance from the coupling unit 16 the cable end section 8 is provided with collet 17 that is fixedly attached to the cable's end section 8. The upper face of module's base plate 5 supports the lower face of the cable's end section 8, and the lower side of a second module 2, 4 stacked onto the module 3, 2 supports the upper face of the cable's end section 8. For the latter, the base plate's 5 lower face is provided with a shallow depression 18.

The lower side wall 7 comprises a lower projection 19 for supporting a lower face of the coupling unit 16 of the cable end section 8 that is supported by the upper side of the base plate 5. Similarly, for supporting an upper face of this coupling unit 16, the upper side wall 6 comprises an upper projection 20. Moreover, the lower projection 19 doubles as an upper support for the coupling unit 16 of an adjacent cable end section 8, and the upper projection 20 doubles as a lower support for the coupling unit 16 of an adjacent cable end section 8. As a result, in a stack of modules 2, 3, 4 the upper side and the lower side of each coupling unit 16 are held on both sides, ie, on the side of the upper side walls 6 and the side of the lower side walls 7. The coupling units 16 are supported by the coupling unit support members 19, 20 so that they are movable in the longitudinal direction of the end section 8 of the cable.

Moreover, for supporting the collet 17, the lower side wall 7 comprises a lower collet support member 21 for supporting a lower face of a collet 17 of the cable end section 8 the lower face of which that is supported by the upper side of the base plate 5, and the upper side wall 6 comprises an upper collet support member 22 for supporting an upper face of the collet 17. Unlike the coupling unit 16, the collet 17 is held in the connector housing 1 in a way that it cannot move in the longitudinal direction of the end section 8 of the cable but is fixed. For this purpose, each the upper 6 and the lower side walls 7 comprises both a forward stop 23 and a backward stop 24 for the collet 17 of the cable end section 8 the lower face of which that is supported by the upper side of the base plate 5. Moreover, each of the upper 6 and the lower side walls 7 comprises both a forward stop 25 and a backward stop 26 for the collets of an adjacent cable end sections.

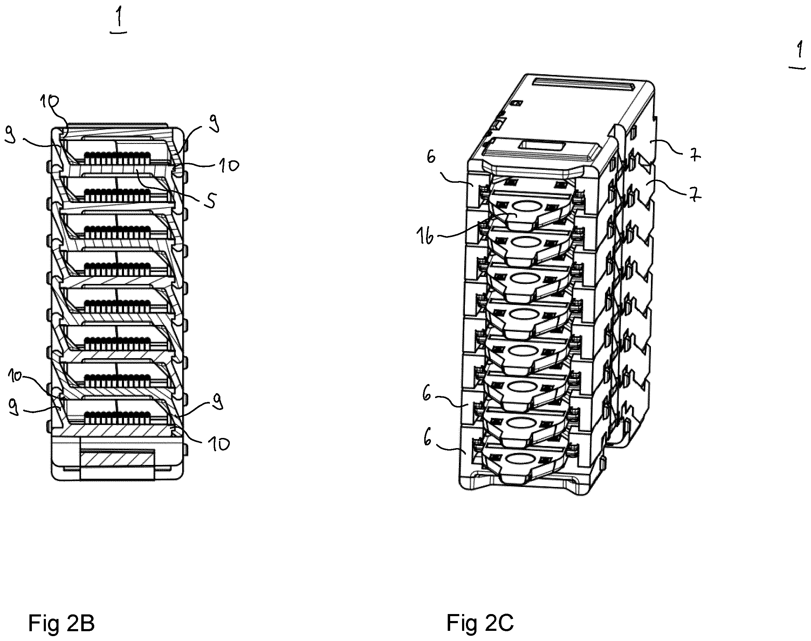

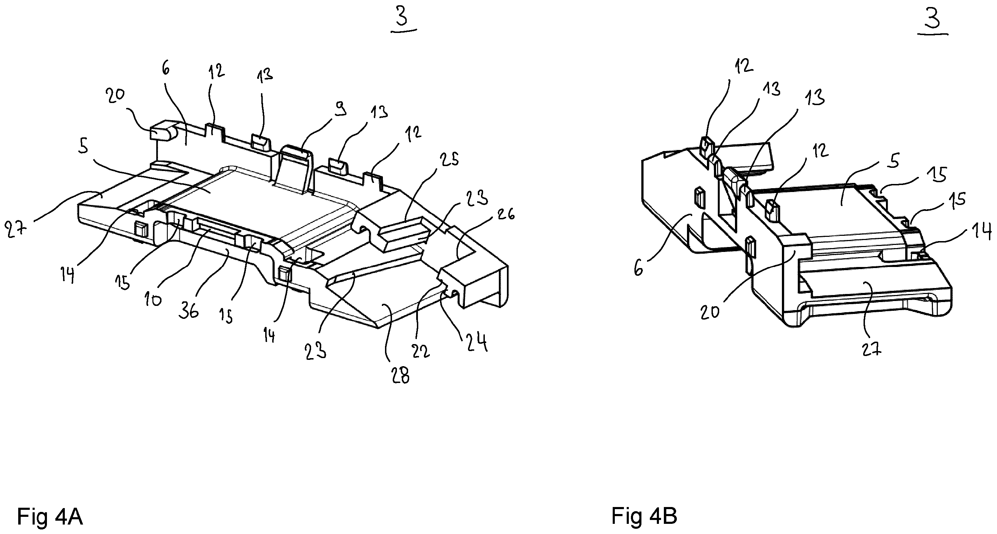

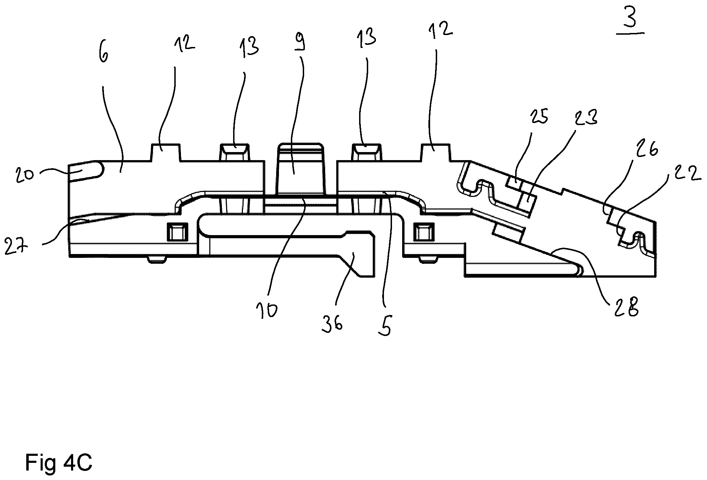

The module at the bottom of the stack of modules in Figures **2A****,** **2B****,** **2C** and **3** is a lower end module 3, which is different in design from the stacking module 2. Details of the lower end module 3 are shown in **Figures 4A, 4B** **and** **4C****.** Unlike the stacking module 2, the lower end module 3 comprises only one side wall, an upper side wall 6, which at the first edge (facing away from the viewer in **Figures 4A** **and** **4C** and on the left in **Figure 4B****)** of the base plate 5 extends away from the base plate's 5 upper face.

The lower end module 3 provides one half of a cavity for receiving an end section 8 of a cable, the other half being provided by a stacking module 2 or an upper end module 4 (discussed further below) if the stacking module 2 or the upper end module 4 is stacked on top of the lower end modules. As is shown in **Figure 2A****,** an end section 8 of an optical flat ribbon cable extends in the cavity formed by the lower end module 3 and the stacking module 2 or the upper end module 4 in the same way as it extends in the cavity formed by two adjacent stacking modules 2; in particular, the upper face of lower end module's 3 base plate 5 supports the lower face of the cable's end section 8, and the lower side the stacking module 2 or the upper end module 4 supports the upper face of the cable's end section 8.

In the same way as in the stacking module 2, along the first edge of the lower end module's 3 base plate 5 the upper side wall 6 is interrupted to give way for a latching hook 9 of the kind discussed before to snap onto a corresponding latching edge 10 of the stacking module 2 or the upper end module 4 to rigidly assemble the modules. This can be best seen in **Figure 4A****.** As discussed before, the latching hook 9 is provided with a handle edge 11 that is accessible from the outside even after the modules have been assembled so that by operating the handle edge 11, a user can release the snap connection between the latching hook 9 and its corresponding latching edge 10.

In a fashion identical to that of the upper side wall 6 of the stacking module 2, the upper side wall 6 of the lower end module 3 is provided at its distal edge with four protrusions, two 12 on the inside and two 13 on the outside of the upper side wall 6, that project away from the upper side wall's 6 distal edge as an extension of it. Each protrusion 12, 13 can slide into a corresponding recess 14, 15 of the stacking module 2 or the upper end module 4 stacked on top of the lower end module 3 to improve the rigidity of the assembly. On the second edge of the base plate 5, where the stacking module 2 has a lower side wall, the same recesses 14, 15 are provided as in the stacking module 2 so that into each recess 14, 15 a corresponding protrusion 12, 13 of the stacking module 2 or the upper end module 4 stacked on top of the lower end module 3 can slide to improve the rigidity of the assembly.

Also in the same way as in the case of the stacking module 2, the lower end module's 3 upper side wall 6 comprises an upper projection 20 for supporting an upper face of a coupling unit 16 of the cable end section 8 the lower face of which is supported by the upper face of the base plate 5. The upper projection doubles as a lower projection for supporting the coupling unit 16 of an adjacent cable end section 8. From below, the coupling unit 16 is supported by a lower coupling unit support plate 27 that extends from the base plate 5 and, like the base plate 5, spreads across the entire width of the lower end module 3. The coupling unit 16 is movable in the longitudinal direction of the end section of the cable 8.

For supporting the collet 17 of the cable end section 8 that is supported by the upper side of the base plate 5, the upper side wall 6 comprises the same upper collet support member 22 as the stacking module 2. From below, the collet is supported by a lower collet support plate 28 that extends from the base plate 5 in the direction opposite of that of the lower coupling unit support plate 27 and, like the latter, spreads across the entire width of the lower end module 3.

To contribute to fixing the collet in the housing in a way that it cannot move in the longitudinal direction of the cable end section of the cable but are fixed, the upper side wall 6 has the same forward 23 and backward 24 stops as the stacking module. Moreover, the lower collet support plate 28 has a forward stop 23.

The construction of both the stacking module 2 and the lower end module 3 takes into account that the collet 17 is slightly trapezoidal in the sense that the collet's 17 length, in the longitudinal direction of the cable end section 8, is shorter on the side of the upper side wall 6 than it is on the side of the lower side wall 7. To accommodate for this, the space between the forward stop 23 and the backward stop 24 likewise widens from the side of the upper side wall 6 to the side of the lower side wall 7. Moreover, the proximal edge of the lower side wall 7 is lowered below the lower side of the collet 17. As a result, the collet 17 of the cable end section 8 the lower face of which is supported by the upper face of the base plate 5, can, from the side of the second edge of the base plate 5, be slid into the space between the lower 21, 28 and upper collet support 22 and the forward stop 23 and backward stop 24.

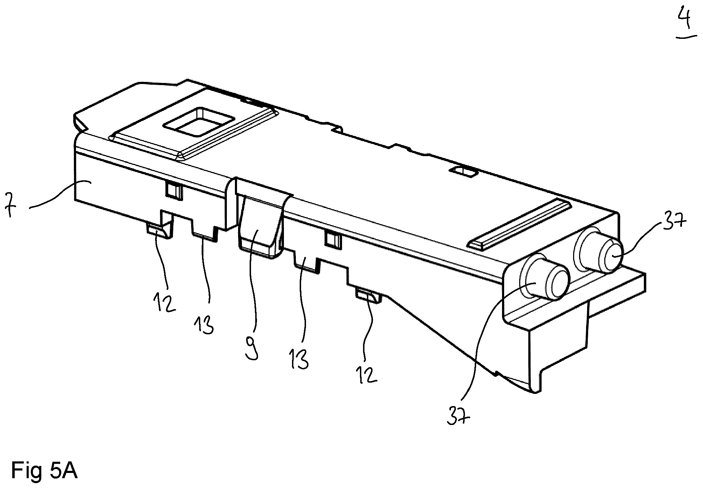

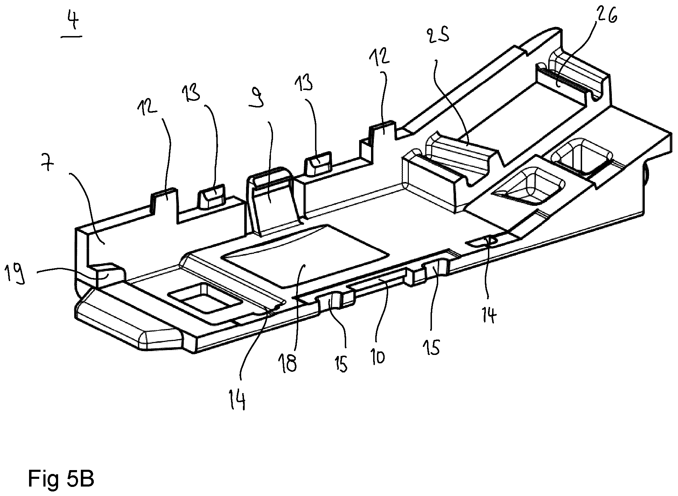

The module at the top of the stack of modules in Figures **2A****,** **2B, 2C** is an upper end module 4, which, too, is different in design from the stacking module 2. Details of the upper end module 4 are shown in **Figures 5A** **and** **5B****.** The upper end module 4 comprises only a lower side wall 7, which at the second edge (facing towards the viewer in **Figures 5A** and away from the viewer in **Figure 5B****)** of the base plate 5 extends away from the base plate's 5 lower face.

The upper end module 4 provides one half of a cavity for receiving an end section 8 of a cable, the other half being provided by a stacking module 2 or a lower end module 3 if upper end module 4 is stacked on top of the stacking module 2 or the lower end module 3. As is shown in **Figure 2A**, an end section 8 of an optical flat ribbon cable extends in the cavity formed by the upper end module 4 and the stacking module 2 or the lower end module 3 in the same way as it extends in the cavity formed by two adjacent stacking modules 2; in particular, the lower face of upper end module's 4 base plate 5 supports the upper face of the cable's end section 8, and the upper side of the stacking module 2 or the lower end module 3 supports the lower face of the cable's end section 8.

In the same way as in the stacking module 2, along the second edge of the upper end module's base plate 5 the lower side wall 7 is interrupted to give way for a latching hook 9 of the kind discussed before to snap onto a corresponding latching edge 10 of the stacking module 2 or the lower end module 3 to rigidly assemble the modules. A handle edge 11 of the latching hook 9 is accessible from the outside even after the modules have been assembled so that by operating the handle edge 11, a user can release the snap connection between the latching hook 9 and its corresponding latching edge 10.

Moreover, in a fashion identical to that of the lower side wall 7 of the stacking module 2, the lower side wall 7 of the upper end module 4 is provided at its distal edge with four protrusions, two 12 on the inside and two 13 on the outside of the lower side wall 7, that project away from the lower side wall's 7 distal edge as an extension of it. Each protrusion 12, 13 can slide into a corresponding recess 14, 15 of the stacking module 2 or the lower end module 3 on top of which the upper end module 4 is stacked, thereby improving the rigidity of the assembly. On the first edge of the base plate 5, where the stacking module 2 has an upper side wall 6, the same recesses 14, 15 are provided as in the stacking module 2 so that into each recess 14, 15 a corresponding protrusion 12, 13 of the stacking module 2 or the lower end module 3 onto which the upper end module 4 is stacked can slide to improve the rigidity of the assembly.

The stacking module's 2 projection 19 in the lower side wall 7 for supporting the lower face of a coupling unit 16 of the cable end section 8 is also present in the lower side wall 7 of the upper end module 4. Moreover, for supporting the collet 17 of the cable end section 8, the lower side wall 7 of the upper end module 4 comprises the same upper collet support member 22 and forward 23 and backward stops 24 as the lower side wall 7 of the stacking module 2.

The connector housing 1 is typically assembled from bottom to top starting with a first step of inserting a cable end section 8 into a lower end module 3 or a stacking module 2 (the lower end module being preferred over the stacking module in this first step). If desired, in a second step on top of this module a stacking module 2 can be stacked, and another cable end section 8 be inserted. This second step can be repeated as often as desired. Finally, if desired, in a third step the stack can be completed with an upper end module 4.

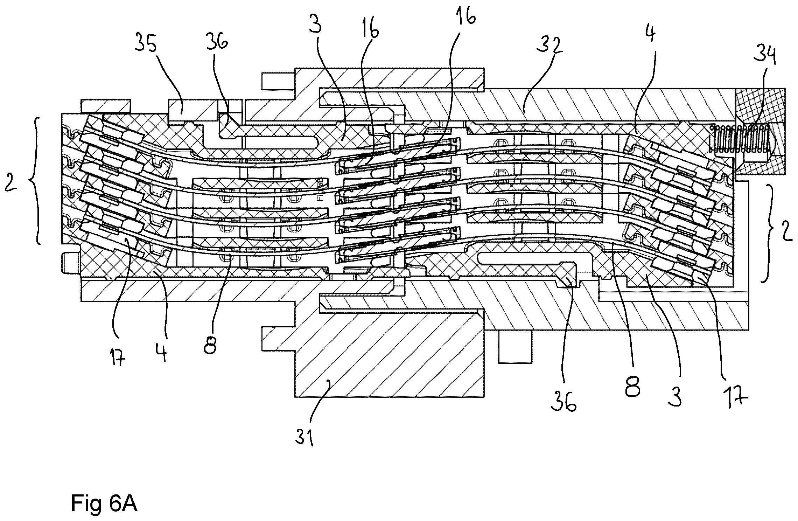

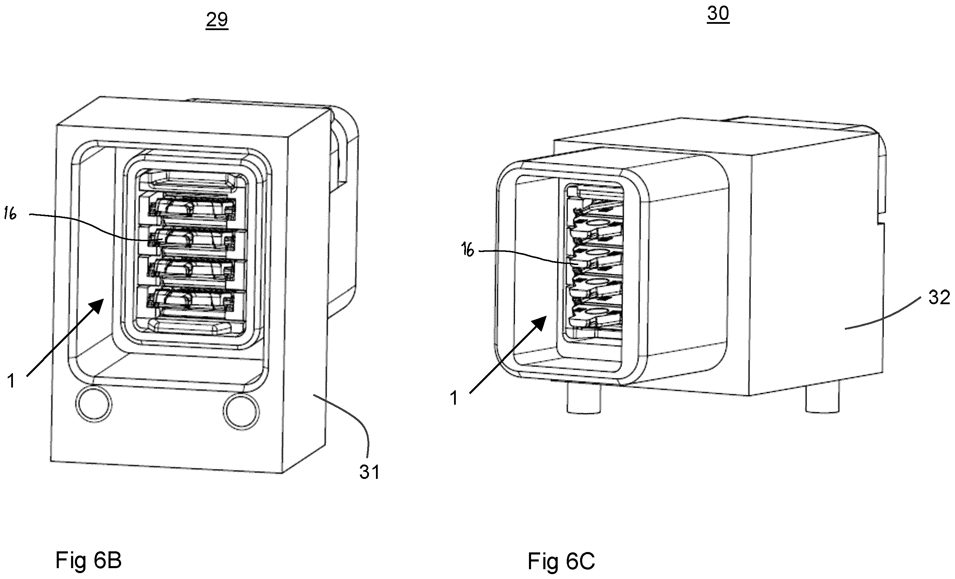

The housing 1 can form a component of a connector part 29, 30 by placing it in an outer connector housing 31, 32. An example of a female connector part 29 and a male connector part 30 inserted into the female connector 29 part is shown in cross-sectional view in **Figure 6A****.** **Figures 6B and 6C** show the female connector part 29, in particular its female outer connector housing 31, in a perspective view and **Figure 6C** shows the matching male connector part 30, in particular its male outer connector housing 32, in a perspective view.

To ensure that the coupling units 16 of the female connector part 29 are reliably connected to the coupling units 16 of the male connector part 30, if the two connector parts 29, 30 are assembled, in each outer connector housing 31, 32 the connector housing 1 is biased in the direction towards the connector face where the connector part 29, 30 meets its matching connector part 30, 29 by means of springs 33, 34. In each connector part 29, 30, the connector housing 1 is slidably arranged in the outer connector housing 31, 32, and the springs 33. 34 exerts a force between the outer connector housing 31, 32 and the connector housing 1 to bias it in the direction of the connector face.

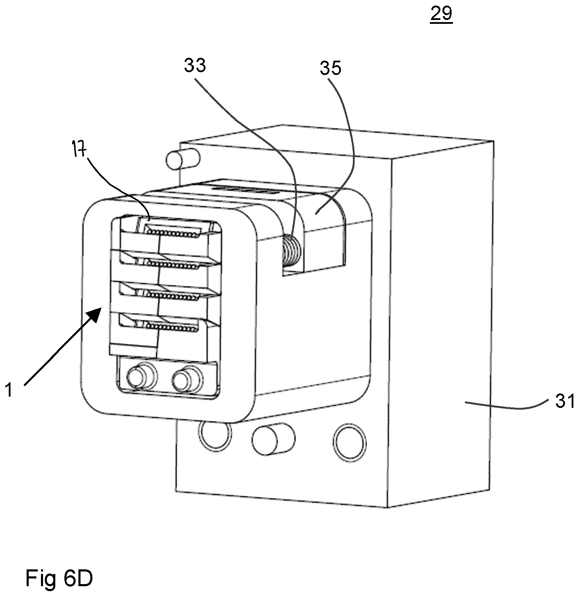

In the case of the female connector part 29, a pair of springs 33 (of which only one spring is shown in **Figure 6D** and which are not visible in Figures 6A and 6B) is placed between the female outer connector housing 31 and a biasing member 35 which abuts at a biasing hook 36 of a lower end module 3 of the connector housing 1 to bias the connector housing 1 in the direction of the connector face. In the case of the male connector part 30, a pair of springs 34 (of which is only one spring shown in **Figure 6A** and which is not visible in **Figure 6C****)** is placed between the male outer connector housing 32 and an upper end module 4 of the connector housing. Each spring 34 sits on a biasing nose 37 of the upper end module 4.

The features as described in the above description, claims and figures can be relevant individually or in any combination to realise the various embodiments of the invention.

### Reference numerals

- 1: connector housing
- 2: stacking module
- 3: lower end module
- 4: upper end module
- 5: base plate
- 6: upper side wall
- 7: lower side wall
- 8: end section
- 9: latching hook
- 10: latching edge
- 11: handle edge
- 12: protrusion
- 13: protrusion
- 14: recess
- 15: recess
- 16: coupling unit
- 17: collet
- 18: shallow depression
- 19: lower projection
- 20: upper projection
- 21: lower collet support member
- 22: upper collet support member

- 23: forward stop
- 24: backward stop
- 25: forward stop
- 26: backward stop
- 27: lower coupling unit support plate
- 28: lower collet support plate
- 29: female connector part
- 30: male connector part
- 31: female outer connector housing
- 32: male outer connector housing
- 33: spring
- 34: spring
- 35: biasing member
- 36: biasing hook
- 37: biasing nose

## Claims

1. A stacking module for a connector housing which can be assembled with another, identical stacking module in a stack to form the connector housing, the stacking module comprising a base plate with an upper face and a lower face, wherein at a first edge of the base plate an upper side wall extends away from the base plate's upper face and wherein a first fastener and a first counter fastener are provided at one of the first and the second edges of the base plate, wherein a lower side wall extends at a second edge of the base plate away from the lower face of the base plate, the second edge being opposite the first edge.

2. The stacking module of claim 1, wherein a second fastener and a second counter fastener are provided at the other of the first and the second edge of the base plate.

3. The stacking module of claim 1, wherein one of the first fastener and the first counter fastener is a latching hook and the other of the first fastener and the first counter fastener is a latching edge so that the latching hook of the module can cooperate with the latching edge of the second module to assemble the module with the second module.

4. The stacking module of claim 1, wherein one of the first edge and the distal edge of the upper side wall is provided with a protrusion and the other of the first edge and the distal edge of the upper side wall is provided with a recess so that the protrusion or recess of the stacking module can cooperate with the recess or protrusion of the other stacking module when stacking module are assembled.

5. The stacking module of claim 1, wherein the upper face of the base plate can support a lower face of an end section of a cable, and the lower face of the base plate can support an upper face of an end section of a cable.

6. The stacking module of any one of claim 1, wherein the lower side wall comprises a lower coupling unit support member for supporting a lower face of a coupling unit of a connector that can be held in the stacking module.

7. The stacking module of claim 1, wherein the upper side wall comprises an upper coupling unit support member for supporting an upper face of a coupling unit of a connector that can be held in the stacking module.

8. The stacking module of claim 1, wherein the lower side wall comprises a lower collet support member for supporting a lower face of a collet of a connector that can be held in the stacking module.

9. The stacking module of claim 1, wherein the upper side wall comprises an upper collet support member for supporting an upper face of a collet of a connector that can be held in the stacking module.

10. The stacking module of claim 1, wherein the lower side wall comprises a forward stop and/or a backward stop for the collet that can be held in the stacking module.

11. The stacking module of claim 1, wherein the upper side wall comprises a forward stop and/or a backward stop for the collet that can be held in the stacking module.

12. A lower end module for a connector housing which can be assembled with a stacking module according to claim 1, the lower end module comprising a base plate with a upper face and a lower face, wherein at a first edge of the base plate an upper side wall extends away from the base plate's upper face, wherein a first fastener is provided at one of the first edge and a second edge of the base plate so that the first fastener of the lower end module can cooperate with the first counter fastener of the stacking module to assemble the lower end module with the stacking module.

13. An upper end module for a connector housing which can be assembled with a stacking module according to claim 1 to form the connector housing, the upper end module comprising a base plate with a upper face and a lower face, wherein at a second edge of the base plate a lower side wall extends away from the base plate's lower face, wherein a second fastener is provided at one of the second edge and a first edge of the base plate so that the second fastener of the upper end module can cooperate with the second counter fastener of the stacking module to assemble the upper end module with the stacking module.

14. A set for assembling a connector housing, the set comprising at least two stacking modules of claim 1, or at least two modules of the group of modules comprising a stacking module of claim 1, a lower end module of claim 12 and an upper end module of claim 13.

15. A connector housing assembled form a set of claim 14.
